# EUROPEAN PATENT APPLICATION

(11) **EP 2 687 978 A2**
(43) Date of publication of application: **22.01.2014**
(21) Application number: 13176774.1
(22) Date of filing: 17.07.2013
(51) Int. Cl.: G06F 3/12

(54) **Printing device, printing system, and printing method**

(30) Priority: 19.07.2012 JP 2012160229; 20.07.2012 JP 2012161213; 08.03.2013 JP 2013046461
(71) Applicant: Seiko Epson Corporation, Tokyo 163-0811 (JP)
(72) Inventor: Shima, Shoji, Suwa-shi, Nagano 392-8502 (JP); Terashima, Katsutoshi, Suwa-shi, Nagano 392-8502 (JP); Furuhata, Tadashi, Suwa-shi, Nagano 392-8502 (JP); Takamoto, Akio, Suwa-shi, Nagano 392-8502 (JP)
(74) Representative: MERH-IP Matias Erny Reichl Hoffmann

(57) **Abstract**

The first printer 30 in a printing system 1 has USB interfaces 40, 45, and a first printer print unit 60, operates as a target device to the device connected to USB interface 40, and operates as a host to the device connected to the USB interface 45. The first printer print unit 60 prints based on the data received when operating as either a target or host device.

## Description

### BACKGROUND

### 1. Technical Field

The present invention relates to a printing device, a printing system, and a printing method.

### 2. Related Art

Printing systems that print receipts using a printer connected to a host computer are known from the literature. See, for example, Japanese Unexamined Patent Appl. Pub. JP-A-2009-187078.
Systems that print using multiple printers connected to a host computer are also known from the literature. See, for example, Japanese Unexamined Patent Appl. Pub. JP-A-2008-176574. The system disclosed in JP-A-2008-176574 has two printers connected through an RS-232C interface to a host computer on which a POS application is installed. In this system a personal computer sends print data and data specifying a particular printer to the printers, and the specified printer prints a receipt or journal.
Systems that print by sending data from a computer to a printer, and can substitute one printer for another are also known from the literature. See, for example, Japanese Unexamined Patent Appl. Pub. JP-A-2012-096503.

The system taught in JP-A-2008-176574 has a special configuration for individually controlling two devices by a personal computer. For example, a subset of pins in the interface of the personal computer is connected to a receipt printer, another subset of pins is connected to a journal printer, and both a receipt printer and journal printer are connected to the personal computer. The personal computer also has a function for specifying one of the two printers. In a system that controls plural devices by means of a control device such as a host computer, both the control device and the controlled devices must have a special configuration enabling sharing plural devices. A device driver program for controlling each of the printers must also be installed on the control computer. Both the hardware and software configuration of the control device and the controlled devices (printers) must therefore be changed when the configuration of the printing system is changed by adding a different printer or replacing a printer.

### SUMMARY

The present invention is directed to solving the foregoing problem by enabling easily adding a device to a system having a target device connected to a host computer or other control device.
The invention also enables changing the printer configuration in a system that controls a printer.

A printing device according to one aspect of the invention has a first interface that sends and receives data; a first device controller that controls the printing device to operate as a target device to a device connected to the first interface; a second interface that sends and receives data; a second device controller that controls the printing device to operate as a host to a device connected to the second interface; and a print unit that prints based on data received by the first interface as the target device, or data received by the second interface as the host.
The printing device in this aspect of the invention operates as a target device relative to the device connected to the first interface, and operates as a host relative to the device connected to the second interface. As a result, the printing device can be connected to both a device that operates as a host and a device that operates as a target device. For example, the printing device can be connected between a device that operates as a host and a device that operates as a target device. A printing device according to the invention can therefore be installed between host and target devices without changing the configuration of the host or target device.

In a printing device according to another aspect of the invention, the first interface preferably sends and receives data through the first device controller; and the second interface preferably sends and receives data through the second device controller.
In this aspect of the invention the printing device operates as a target device when exchanging data with the device connected to the first interface, and operates as a host when exchanging data with the device connected to the second interface. For example, the printing device can reside between the host and a target device, receive data sent by the host, and pass the received data to the target device. The printing device can therefore be installed between and send and receive data with the host and target devices without changing the configuration of the host and target devices. As a result, a new printer can be installed between a device that operates as a host and a device that operates as a target device, and can print based on data sent by the device operating as the host to the target device.

Further preferably, the printing device also has a storage unit that stores data received by the first interface; and the print unit preferably analyzes the data stored in the storage unit, and preferably prints based on the result.
This aspect of the invention stores and analyzes data received by the first interface, and prints. The printing device can, for example, print based on data sent to another device by the device connected to the first interface. In addition to printing data received as a target device, the printing device can also send the received data from the second interface to another device, or perform other operations based on the data received as a target device.

Further preferably, the printing device receives data as a host through the second interface, preferably transmits data as a target device through the first interface, and the print unit preferably prints based on the data received through the second interface.
The printing device can thus receive data as a host from the device connected to the second interface, and send data as a target device to the device connected to the first interface. The printing device can therefore be installed between a device operating as a host and a device operating as a target device without changing the configuration of the host and target devices, and can print based on data output by the device operating as a host.

In a printing device according to another aspect of the invention, the storage unit preferably stores data received by the second interface.
This configuration enables performing a different operation based on the received data, such as sending data received as a host to another device from the first interface operating as a target device.

In another aspect of the invention, the first interface is preferably connected to a host computer that sends a print instruction; the second interface is preferably connected to a second printing device; and the print unit preferably prints based on the received print instruction or based on a received command indicating a print result of the second printing device when the second interface receives the command indicating the print result of the second printing device.
The printing device in this aspect of the invention receives a command indicating the print result from a second printing device connected to the second interface, and prints based on the received command or based on the print instruction. As a result, the printing device can be installed between the host computer and a second printing device, and can print based on the result of printing by the second printing device, without changing the configuration of the host computer or second printing device.

In a printing device according to another aspect of the invention, the first device controller preferably has a device control circuit compatible with a first protocol that controls operation as a target device; and the second device controller preferably has a host control circuit compatible with a second protocol that controls operation of an external device connected to the second interface.
The printing device can therefore be easily installed between a device operating as a host and a device operating as a target device without changing the configuration of the host and target devices.

Further preferably, the printing device also has an interface board to which the first interface and second interface are disposed; and/or a print control board to which a print control unit that controls the print unit to print is disposed.
The first and second interfaces can be installed on an interface board separate from the print control board on which the print control unit is disposed. A printing device with plural interfaces can therefore be easily achieved.

Further preferably, the printing device also has a device information storage unit that stores first device information including the type of print unit, and second device information for a printing device different from the print unit; and/or a control unit that preferably outputs the first device information or the second device information to the host computer when the host computer is connected to the first interface.
This aspect of the invention stores device information about the print unit, and device information about a different printing device than the print unit, and outputs the device information for the different printing device to the host computer. As a result, the printing device according to the invention can be recognized as a different printing device when the host computer is connected to the first interface. A printing device different from the printing device with which the host computer is compatible can therefore be connected to the host computer without changing the configuration of the host computer. The printing device configuration can therefore be changed in a system having a printing device connected to a host computer without changing the configuration of the host computer.

When the host computer outputs data that is processed by the second printing device, the printing device receives the output data through the first interface and outputs the received data from the second interface.
Data output from the host computer to a different printing device can thus be received by the first interface and output from the second interface. The printing device can therefore process data output by the host computer, and output the received data to another device for processing.

Another aspect of the invention is a printing system including: a host computer that sends a print command and print data; a first printing device (such as e.g. a printing device according to one or more of the above-described aspects) including a first interface that connects to the host computer, a first device controller that controls the first printing device to operate as a target device to the host computer connected to the first interface, a second interface, a second device controller that controls the first printing device to operate as a host, and a first print unit that prints; and/or a second printing device including a communication unit that connects to the second interface of the first printing device, and a second print unit that prints.
The first printing device connected to a host computer and second printing device in this aspect of the invention operates as a target device to the host computer and as a host to the second printing device. The first printing device can therefore be installed and operate between a host computer and a second printing device without changing the configuration of the host or second printing device.

In a printing system according to another aspect of the invention, the first printing device preferably receives the print command and print data sent from the host computer through the first interface with the first device controller operating as a target device, preferably sends the print command and print data received by the first interface through the second interface with the second device controller operating as a host to the second printing device, and the first print unit preferably prints based on the print data received by the first interface; and the second printing device preferably receives the print command and print data sent from the second interface of the first printing device through the communication unit, and preferably prints the print data with the second print unit based on the received print command.
In this aspect of the invention the first printing device receives a print command and print data output by the host computer, and can print based on and output the received print command and print data to the second printing device connected to the second interface. The first printing device can therefore be installed between a host computer and second printing device operating as a target device without changing the configuration of the host computer or second printing device. Print commands and print data sent from the host computer can also be processed by both the first printing device and second printing device.

In a printing system according to another aspect of the invention, the first printing device preferably has a storage unit that stores print data received through the first interface, and/or an analyzer that preferably analyzes the print data stored in the storage unit; and the first print unit preferably prints based on the result of analysis by the analyzer.
The first printing device in this aspect of the invention can store, analyze, and print based on the data received as a target device by the first interface. In addition to printing the received data, the first printing device can also send the received data to another device from the second interface.

In a printing system according to another aspect of the invention, the second printing device preferably sends data related to the result of the second print unit through the communication unit to the second interface of the first printing device; and the first printing device preferably receives the data related to the result of the second print unit through the second interface, and preferably sends the data received by the second interface to the host computer through the first interface.
In this aspect of the invention the first printing device operates as a host to receive data sent from the second printing device, prints the received data, and outputs the received data to the host computer as a target device. The first printing device can therefore be installed between a host computer and second printing device operating as a target device without changing the configuration of the host computer or second printing device. The first printing device can also print data related to the result of printing by the second printing device, and can send this print result data to the host computer as data related to the result of the target device executing an operation.

Further preferably in this printing system, the data related to the result of the second print unit is a print error of the second print unit; and the first interface of the first printing device preferably sends the print error to the host computer.
The first printing device in this aspect of the invention can print based on data related to a print error of the print unit of the second printing device, and can send this print error data to the host computer.

In a printing system according to another aspect of the invention, the first printing device preferably has a device information storage unit that stores first device information including the type of the first print unit, and second device information including the type of the second print unit, and preferably sends the second device information stored in the storage unit to the host computer when the host computer requests device information from the first printing device.
The first printing device in this printing system can output second device information for the second printing device to the host computer, causing the host computer to recognize the first printing device as the second printing device. The first printing device can therefore be connected to a host computer compatible with the second printing device without changing the configuration of the host computer. The configuration of the printing device can therefore be changed without changing the configuration of the host computer in a system having a host computer connected to a printing device.

In a printing system according to another aspect of the invention, the host computer preferably sends print data that is processed by the second printing device to a connection unit of the first printing device; the first printing device preferably receives the print data sent from the host computer and preferably sends the received print data to the second printing device; and the second printing device preferably receives the print data sent from the first printing device and preferably prints the received print data using the second print unit.
In this aspect of the invention the first printing device receives the print data sent by the host computer to the second printing device, and passes the print data to the second printing device. As a result, both the first printing device and the second printing device can process print data output by the host computer.

In a printing system according to another aspect of the invention, the first printing device preferably has a data interpreter that analyzes print data sent from the host computer, and a print data storage unit that preferably stores predetermined information and print data related to the predetermined information; the data interpreter preferably determines if the predetermined information is contained in the print data; and the first print unit preferably prints print data related to the predetermined information if the predetermined information is contained in the print data.
This aspect of the invention enables connecting a first printing device without changing the configuration of the host computer, and enables the first printing device to interpret the print data output by the host computer and print related information.

In a printing system according to another aspect of the invention, the host computer preferably is a POS terminal that processes transaction information; and the second printing device preferably prints a receipt related to the transaction information sent from the POS terminal.
This aspect of the invention enables connecting a first printing device to a POS terminal without changing the configuration of a POS terminal that prints receipts using a second printing device, and both print receipts using the second printing device and execute another process on the first printing device.

Another aspect of the invention is a printing method including steps of: requesting, by a host computer, device information including the type of the printing device from the first printing device after the host computer and a first printing device with a first print unit are connected; sending, by the first printing device, second device information from a device information set including first device information identifying the type of the first print unit and second device information about a second print unit in a second printing device when device information is requested by the host computer; transmitting, by the host computer, print data to be processed by the second printing device; sending, by the first printing device, the print data to the second printing device connected to the first printing device; and printing, by the second printing device, on the basis of the print data.
With this aspect of the invention a first printing device connected to a host computer outputs second device information for a second printing device to the host computer. As a result, the host computer can be made to recognize the first printing device as the second printing device. The first printing device can therefore be connected to a host computer compatible with a second printing device without changing the configuration of the host computer. The configuration of the printing device can therefore be changed without changing the configuration of the host computer in a system having a host computer and printing device connected to each other.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is an exemplary function block diagram of a printing system according to a first embodiment of the invention.
FIG. 2 is an exemplary block diagram showing the functional configuration of the first printer in detail.
FIG. 3 is an exemplary sequence diagram showing the operation of the first embodiment.
FIG. 4 is an exemplary function block diagram of a first printer according to a second embodiment of the invention.
FIG. 5 is an exemplary sequence diagram showing the operation of the second embodiment.
FIG. 6 is an exemplary sequence diagram showing the operation of the second embodiment.

### DESCRIPTION OF EMBODIMENTS

### Embodiment 1

A preferred embodiment of the present invention is described below with reference to the accompanying figures.

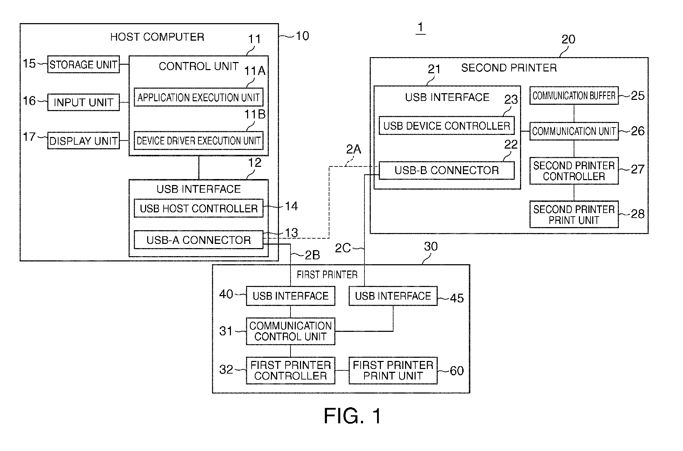

FIG. 1 is an exemplary function block diagram showing the configuration of a printing system 1 according to a first embodiment of the invention.
The printing system 1 includes a host computer 10 that runs an application program, generates documents, and outputs print commands, and a second printer 20 (second printing device) that prints according to the print commands output by the host computer 10. A first printer 30 is further connected between the host computer 10 and second printer 20. The host computer 10 and second printer 20 can also be directly connected 1:1 by a direct communication connection, for example, through a USB cable 2A. When connected directly, the second printer 20 directly receives commands and data output by the host computer 10 and prints. In this printing system 1 the first printer 30 remains connected to the host computer 10 when the USB cable 2A connecting the second printer 20 to the host computer 10 is disconnected. More specifically, the host computer 10 is connected to the first printer 30 by a second communication connection, for example, by USB cable 2B, and the second printer 20 is connected by a third communication connection, for example by another USB cable 2C, to the first printer 30. The first printer 30 and second printer 20 are thus connected in a daisy chain to the host computer 10 in this printing system 1.

The host computer 10 includes a control unit 11, a storage unit 15 connected to the control unit 11, an input unit 16, and a display unit 17. The host computer 10 also has a USB interface 12 as an interface to which external devices connect. The USB interface 12 includes a USB-A connector 13, and a USB host controller 14 that handles communication with the device connected through a USB cable to the USB-A connector 13 according to a specific protocol.

The control unit 11 includes a CPU and memory such as RAM or ROM, and centrally controls other parts of the host computer 10 by running programs stored in the storage unit 15.
The application execution unit 11A of the control unit 11 executes an application program stored in the storage unit 15. For example, the control unit 11 may run a POS application program and may operate as a POS terminal. The control unit 11 executes data related to a product sale based on data input by the input unit 16, and outputs data for printing a receipt showing the result of the product sale process together with an instruction to print.
The control unit 11 also has a device driver execution unit 11B. The device driver execution unit 11B runs a device driver program stored in the storage unit 15, and controls devices connected to the host computer 10. The host computer 10 in this embodiment of the invention corresponds to a device that connects through a USB interface, and can execute the device driver program with the device driver execution unit 11B. The device driver execution unit 11B generates print data and print commands causing the printer to print based on the print instructions and data output by the application execution unit 11A, and outputs through the USB interface 12. A device driver that outputs print instructions and data to the second printer 20 is installed in this embodiment.

This USB interface 12 and the USB interfaces 21, 40, 45 described below render the physical layer, link layer, and protocol layers defined by the USB standard, and enable serial data communication between devices connected 1:1. The USB standard as used herein includes USB 1.1 to USB 3.0 and future versions and extensions.

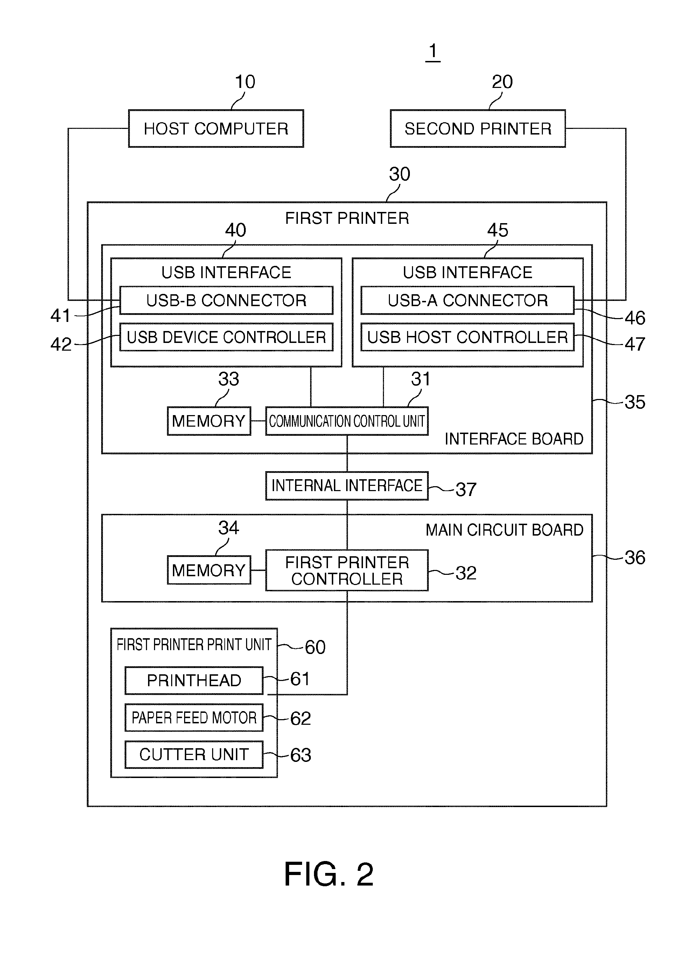

The USB interface 12 has a USB-A connector 13. The USB-A connector 13 is a female connector (receptacle) with the shape and pins specified by the USB standard for a connector of the device on the host side. Standard USB cables 2A and 2B can connect to the USB-A connector 13. The USB-A connector 13 may be a mini-A or a micro-A USB terminal. This also applies to the USB-A connector 46 (FIG. 2) described below. The number of USB-A connectors 13 disposed to the USB interface 12 is not specifically limited.
When a device equivalent to a USB device defined by the USB standard is connected, the USB host controller 14 operates as the host to this device, and can recognize the device and communicate with the device.

The device in this embodiment is, for example, an input/output (I/O) device that connects to another device operating as the host, and outputs data to the host as controlled by the host, or outputs data input from the host. The host is, for example, a computer that sends commands for controlling I/O devices to the connected I/O devices.

The second printer 20 has a second printer print unit 28 that may include a printhead, paper feed motor, conveyance rollers, and/or cutter unit not shown, and is configured to print (records) text and/or images on cut-sheet paper, roll paper, or other print medium. The second printer 20 includes a USB interface 21, communication unit 26, and second printer controller 27. The communication unit 26 exchanges data with the device connected through the USB interface 21. The second printer controller 27 controls the second printer print unit 28 and prints based on data received by the communication unit 26.

The USB-B connector 22 of the USB interface 21 is a female connector with the shape and pins specified by the USB standard for a connector on the device side, and can connect to USB cables 2A and 2C conforming to the USB standard. The USB-B connector 22 may be a mini-B or a micro-B USB terminal. This also applies to the USB-B connector 41 (FIG. 2) described below. The USB device controller 23 operates as a USB device as defined by the USB standard. The USB device controller 23 reports its USB device class ID and device ID to the device connected through a USB cable to the USB-B connector 22, and communicates according to the control data sent from the connected device.

The communication unit 26 receives commands and data through the USB interface 21 and temporarily stores the commands and data in the communication buffer 25. The communication unit 26 also transmits control commands and data about the status of the second printer 20 through the USB interface 21.
The second printer controller 27 reads and executes the commands stored in the communication buffer 25 in the order received. For example, when the second printer controller 27 reads a command requesting a status transmission from the communication buffer 25, the second printer controller 27 generates and sends status information describing the operating status of the second printer 20 from the communication unit 26. When a print command accompanying print data is read from the communication buffer 25, the second printer controller 27 controls the second printer print unit 28 and prints according to the command. The second printer controller 27 then generates a completion report indicating that printing ended, or an error report indicating that an error occurred, and transmits the report by means of the communication unit 26 from the USB interface 21.

The first printer 30 has two USB interfaces 40, 45. The host computer 10 is connected to USB interface 40 by USB cable 2B. The second printer 20 is connected to USB interface 45 by USB cable 2C.
The first printer 30 includes a communication control unit 31 that controls communication through the USB interfaces 40, 45, a first printer print unit 60, and a first printer controller 32 (print control unit). The first printer print unit 60 may include a printhead, paper feed motor, conveyance rollers, and cutter unit not shown, and is configured to print on a print medium. The first printer controller 32 controls the first printer print unit 60 and prints based on data sent and received by the communication control unit 31.

FIG. 2 is an exemplary function block diagram of the printing system 1 showing the configuration of the first printer 30 in detail.
As shown in FIG. 2, USB interface 40 (first interface) includes a USB-B connector 41 (device connector) and a USB device controller 42 (device control circuit). USB interface 45 (second interface) includes a USB-A connector 46 (host connector) and a USB host controller 47 (host control circuit).

Like USB-B connector 22, the USB-B connector 41 is a female connector with the shape and pins specified by the USB standard for a target device connector, and connects to USB cable 2B.
Like USB-A connector 13, USB-A connector 46 is a female connector with the shape and pins specified by the USB standard for a host connector, and connects to USB cable 2C. The number of USB-A connectors 46 in the USB interface 45 is not specifically limited.

The USB device controller 42 reports its USB device class ID and device ID to the device connected to the USB-B connector 41, and communicates according to the control data sent from the connected device. When a USB device as defined by the USB standard is connected to the USB-A connector 46, the USB host controller 47 operates as the host device for the connected USB device, and can recognize the device and communicate with the device.
More specifically, the first printer 30 operates as a USB device relative to the device connected to USB interface 40 (the host computer 10 in this exemplary embodiment), and operates as a host relative to the device connected to USB interface 45 (the second printer 20 in this exemplary embodiment).

The first printer 30 includes memory 33 (storage unit) connected to the communication control unit 31, and memory 34 connected to the first printer controller 32. These memory devices 33, 34 are storage units that temporarily store commands and data.
As shown in FIG. 2, the first printer print unit 60 exemplarily includes a printhead 61, paper feed motor 62, and cutter unit 63. The first printer print unit 60 conveys print media such as cut-sheet paper or roll paper not shown by means of the paper feed motor 62, prints text or images by means of the printhead 61, cuts the printed print medium with the cutter unit 63, and then discharges the printed medium.

The communication control unit 31 is connected to both USB interfaces 40, 45, and communicates with the host computer 10 and second printer 20 through these USB interfaces 40, 45.
When commands and data sent from the host computer 10 are received by the USB interface 40, the communication control unit 31 temporarily stores the received commands and data in memory 33. The communication control unit 31 sends the commands and data stored in memory 33 from the USB interface 45 to the second printer 20. As a result, the commands and data sent by the host computer 10 are sent to the second printer 20. Because the first printer 30 functions as a USB device relative to the host computer 10, the host computer 10 only needs to send commands and data to the device connected to the USB interface 12. In other words, the first printer 30 transmits commands and data in the same way as when the second printer 20 is connected through the USB cable 2A (FIG. 1) to the USB interface 12.
Because the first printer 30 functions as a host for the second printer 20 through the USB interface 45, the second printer 20 operates based on the received commands and data in the same way as when the second printer 20 receives commands and data sent from the host directly. In other words, the second printer 20 receives commands and data and operates in the same way as when the host computer 10 is connected to the USB interface 21 by USB cable 2A.

When data such as print reports and status information is sent from the second printer 20, the communication control unit 31 receives the data through USB interface 45. The communication control unit 31 temporarily stores the received data in memory 33, and sends the data to the host computer 10 through USB interface 40. As a result, data such as print reports and status information sent from the second printer 20 is sent to the host computer 10.
Because the first printer 30 functions as a host for the second printer 20, the second printer 20 operates in the same way as when sending the print reports and status information to the host. Because the first printer 30 functions as a target device relative to the host computer 10, the host computer 10 operates the same way as when the print reports and status information is sent from the device connected to the USB interface 12.
The host computer 10 and second printer 20 thus operate in the same way as when they are connected to each other by USB cable 2A (FIG. 1) through USB interface 12 and USB interface 21.

The communication control unit 31 interprets the commands and data stored in memory 33 to determine if the first printer 30 matches the condition for printing. If the condition is met, the communication control unit 31 generates a print command and print data, and outputs to the first printer controller 32. The communication control unit 31 determines, for example, if a predetermined specific string is contained in the print data sent from the host computer 10. If the specific string is included, the communication control unit 31 outputs to the first printer controller 32 a print command and print data linked to the string and previously stored in memory 33 or ROM (not shown in the figure) of the communication control unit 31. More specifically, when the host computer 10 operates as a POS terminal and transmits a print command and print data for printing a receipt, the communication control unit 31 determines if a predetermined specific product name or product classification data is contained in the print data. If the product name or product classification data is contained in the print data, the communication control unit 31 outputs a print command and print data for printing a previously stored coupon to the first printer controller 32. As a result, the first printer 30 produces a coupon matching the receipt when a specific receipt is printed by the second printer 20.

When the print report, status information, or other data sent by the second printer 20 matches the previously specified data, the communication control unit 31 outputs the corresponding print command and print data to the first printer controller 32. The corresponding print command and print data is previously stored in memory 33 or ROM (not shown in the figure) of the communication control unit 31 linked to the previously specified data. For example, the communication control unit 31 determines if data indicating a print error is contained in the data sent by the second printer 20. When data indicating a print error is found, the communication control unit 31 outputs a print command and print data for printing a slip reporting the error to the first printer controller 32. As a result, the first printer 30 can print a slip reporting the error when an error occurs while printing with the second printer 20.

As described above, the first printer 30 can pass data sent from the host computer 10 to the second printer 20, and based on this data can operate independently of the host computer 10 and second printer 20. The first printer 30 can also pass data sent by the second printer 20 to the host computer 10, and based on this data can operate independently of the host computer 10 and second printer 20.
The first printer 30 is thus disposed between and connects to the host computer 10 and second printer 20 through USB cables 2B and 2C. The first printer 30 can therefore perform functions that are executed by the direct exchange of data between the host computer 10 and second printer 20. The first printer 30 can also perform new operations independently of the host computer 10 and second printer 20. As a result, new functions can be easily added to an existing printing system.
The first printer 30 is also connected to the host computer 10 by a USB interface 40 that operates as a device, and to the second printer 20 by a USB interface 45 that operates as a host. As a result, the host computer 10 and second printer 20 can operate in the same way as when they are connected directly to each other through USB cable 2A. The first printer 30 can therefore be connected between the host computer 10 and second printer 20 without changing the configuration of the printing system 1. Changing the configuration of the printing system 1 includes, for example, changing an application program or device driver program that runs on the host computer 10, and changing the operating conditions of the second printer 20.

The first printer 30 also has a main circuit board 36 (print control board) on which the first printer controller 32 is disposed, and an interface board 35 removably installed in the first printer 30.
The interface board 35 is populated with units including the communication control unit 31, memory 33, and USB interfaces 40, 45. The parts packaged on the interface board 35, and the first printer controller 32 disposed to the main circuit board 36, are connected so that they can exchange data with each other through an internal interface 37 in the first printer 30. Power may be supplied through the internal interface 37 to the parts on the interface board 35, or power may be supplied from the interface board 35 to the main circuit board 36 in a configuration having an external power source connected to the interface board 35.
A first printer 30 that can be installed between the host computer 10 and second printer 20 can thus be achieved by, for example, replacing an interface board having one USB interface with the interface board 35 shown in FIG. 2.

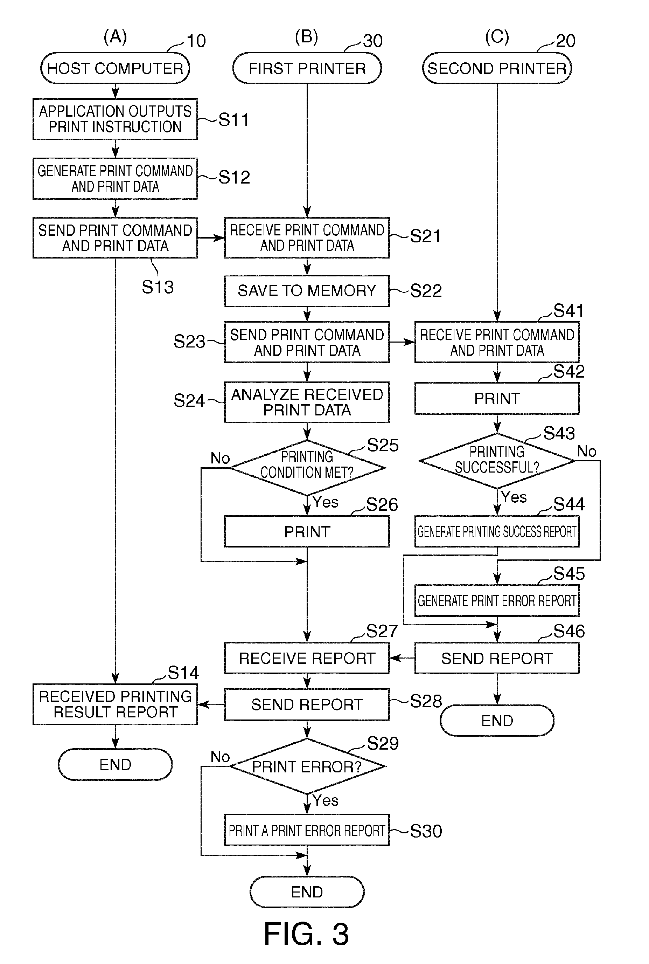

FIG. 3 is an exemplary sequence diagram showing the operation of parts of the printing system, column (A) showing the operation of the host computer 10, (B) showing the operation of the first printer 30, and (C) showing the operation of the second printer 20.
When a document is created and a print instruction is output by the operation of the application execution unit 11A (step S11), the host computer 10 generates a print command and print data based on the print instruction (step S12). In this instance the print command and print data are a print command and print data that operate the second printer 20, and are generated by the device driver execution unit 11B. The generated print command and print data are transmitted from the USB interface 12 (step S13).

The first printer 30 receives the print command and print data sent from the host computer 10 through the USB interface 40 (step S21). The communication control unit 31 stores the print command and print data received by the USB interface 40 to memory 33 (step S22), and outputs the print command and print data from the USB interface 45 (step S23).
The communication control unit 31 analyzes the print data stored in memory 33 (step S24), and determines if the analyzed print data meets a print condition (step S25). If the print condition is met (step S25 returns YES), the communication control unit 31 outputs a preset print command and print data to the first printer controller 32 and prints (step S26). If the print condition is not met (step S25 returns NO), the communication control unit 31 aborts the process and waits.

The second printer 20 then receives the print command and print data sent from the first printer 30 (step S41). The second printer 20 then prints based on the received print command and print data by means of the second printer controller 27 controlling the second printer print unit 28 (step S42).
The second printer controller 27 determines if printing succeeded or failed (step S43), and if printing was successful (step S43 returns YES), outputs a printing success report. The communication unit 26 then generates a printing success report (step S44). If printing failed (step S43 returns NO), the second printer controller 27 outputs a print error, and the communication unit 26 generates a print error report (step S45).
The communication unit 26 then transmits the printing success report generated in step S44 or the print error generated in step S45 from the USB interface 21 (step S46), and ends this process.

The first printer 30 receives and stores the report sent by the second printer 20 through the USB interface 45 to memory 33 (step S27), and sends the report from the USB interface 40 to the host computer 10 (step S28).
The host computer 10 receives the report sent by the first printer 30 through the USB interface 12 (step S14).
The communication control unit 31 of the first printer 30 then interprets the report stored in memory 33 and determines if the report indicates a print error (step S29). If a print error was received (step S29 returns YES), the communication control unit 31 outputs the preset print command and print data to the first printer controller 32, and prints (step S30). If the report stored in memory 33 is not a print error report (step S29 returns NO), the communication control unit 31 ends this process.

As described above, in the printing system 1 according to the first embodiment of the invention, the first printer 30 has a USB interface 40, USB interface 45, and first printer print unit 60. The first printer 30 operates as a USB device of the device connected to the USB interface 40, and sends and receives data. The first printer 30 also operates as a host for the device connected to the USB interface 45, and sends and receives data. The first printer print unit 60 controls printing based on data received as a device by the USB interface 40. The first printer 30 can therefore be connected to a device that operates as a host, and to a device that operates as a device. As shown in steps S11 to S13, S21 to S26, and S41 to S46, the first printer 30 receives data sent by the host computer 10 and sends data to the second printer 20. The first printer 30 therefore resides between a device that operates as a host and a device that operates as a USB device, and can operate as a device that receives data sent by a device operating as a host and sends the data to another device operating as a device. As a result, the first printer 30 can be installed between the host and device without changing the configuration of the host and device, and the device operating as a USB device can print based on the transmitted data.

The first printer 30 also has memory 33 that stores data received by the USB interface 40. The first printer print unit 60 prints based on the data stored in memory 33 according to commands and data generated by the communication control unit 31. As a result, the first printer 30 can send data received from the host computer 10 to the second printer 20 for printing by the second printer 20, and the first printer 30 can print based on the received data. A separate operation can therefore be executed based on the received data.

The USB interfaces 40, 45 are compatible with the USB standard as an example of a specific protocol for controlling the operation of a device that operates as a host and a device that operates as a target device. The USB interface 40 includes a USB-B connector 41 for target devices, and a USB device controller 42 compatible with a first protocol that controls operation as a target device when connected to a device operating as a host. The USB interface 45 includes a USB-A connector 46, and a USB host controller 47 compatible with a second protocol that controls operation of a device that operates as a target device. The first printer 30 operates as a host to the device connected to USB interface 45, and operates as a target device to the device connected to USB interface 40. The first printer 30 can therefore be installed between a device operating as a host and a device operating as a target device, such as the host computer 10 and second printer 20 described above, without changing the configuration of the host and target devices.

### Embodiment 2

This second embodiment of the invention describes a variation of the functional configuration of the first printer 30 in the printing system 1 described above. Note that like parts in this second embodiment and the first embodiment described above are identified by like reference numerals and further description thereof is omitted.

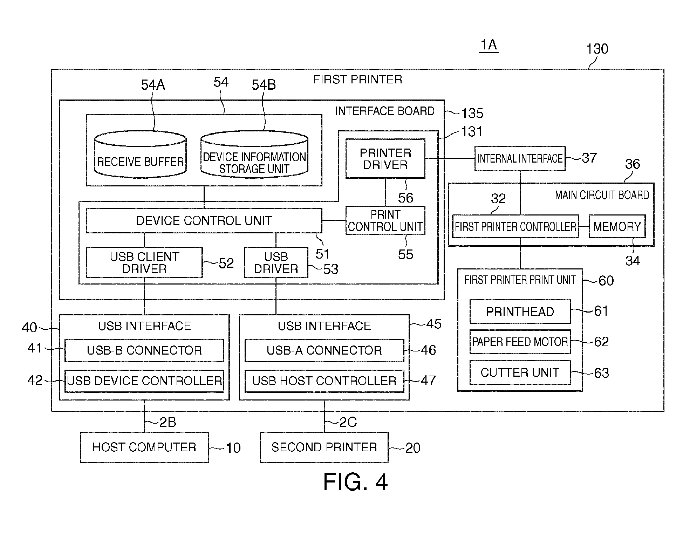

FIG. 4 is an exemplary function block diagram showing the configuration of a printing system 1A according to the second embodiment of the invention, and shows the configuration of the first printer 130 in detail.
The printing system 1A according to the second embodiment of the invention is configured identically to the printing system 1 shown in FIG. 1. As shown in FIG. 4, the printing system 1A according to the second embodiment has a first printer 130 instead of the first printer 30 described above. Like the first printer 30 of the first embodiment, this first printer 130 is disposed between the host computer 10 and second printer 20. The first printer 130 connects to the host computer 10 through USB cable 2B, and to the second printer 20 through USB cable 2C. This first printer 130 has an interface board 135 described below in place of the above interface board 35 shown in FIG. 2.

Like the above first printer 30, the first printer 130 also has two USB interfaces 40, 45. The host computer 10 is connected to USB interface 40 through USB cable 2B, and the second printer 20 is connected to USB interface 45 through USB cable 2C.
The first printer 130 also has a control unit 131 that controls communication through the USB interfaces 40, 45. The first printer 130 also has a first printer print unit 60 (print unit, first print unit) and first printer controller 32 (print control unit) like the first printer 30.

Also like the first printer 30, the first printer 130 operates as a target device to the device connected to the USB interface 40 (host computer 10 in this embodiment), and as a host to the device connected to the USB interface 45 (second printer 20 in this embodiment).
The control unit 131 includes a device control unit 51, USB client driver 52, USB driver 53, print control unit 55, and 56. The control unit 131 includes CPU, RAM, ROM, and other peripheral circuits not shown mounted on the interface board 135, and parts of the control unit 131 are achieved as software constructions as a result of the CPU running a control program. The interface board 135 also has a storage unit 54 connected to the control unit 131. The storage unit 54 includes flash ROM mounted on the interface board 135, for example. A receive buffer 54A (print data storage unit) and device information storage unit 54B (storage unit) are created in the storage space of the storage unit 54. When the control unit 131 receives a print instruction command and data from the host computer 10 as described below, the receive buffer 54A sequentially stores the received commands and data. The device information storage unit 54B stores the USB device information (device information) that the control unit 131 sends to the host computer 10.

The control unit 131 functions as a USB client driver 52 by executing a specific driver program.
The USB client driver 52 operates as a USB device conforming to the USB standard relative to the host computer 10 connected to the USB interface 40. When the device class ID and device ID are requested by the device connected to the USB interface 40, the USB client driver 52 responds to the request by sending the USB device information. The USB device information includes the USB device class ID and device ID. Reporting the USB device information enables data communication with the device.
When the host computer 10 is connected to the USB interface 40 in this embodiment, the USB client driver 52 sends the USB device information to the host computer 10. The USB client driver 52 can output USB device information including the vendor ID for the first printer 130 manufacturer, and the device ID corresponding to the name of the first printer 130. The USB client driver 52 can also output USB device information containing the vendor ID of the second printer 20 manufacturer and the device ID corresponding to the name of the second printer 20 when this information is preset.

More specifically, the first printer 130 stores the USB device information (first device information) of the first printer 130, and the USB device information (second device information) of the second printer 20, in the device information storage unit 54B. When the device control unit 51 detects that the host computer 10 was connected to the USB interface 40, the device control unit 51 outputs the USB device information for the second printer 20 stored in the storage unit 54 to the USB client driver 52 according to a previous setting. The USB client driver 52 reports the USB device information to the host computer 10. As a result, the host computer 10 recognizes that the second printer 20 is connected to the USB-A connector 13 (FIG. 1). In other words, the host computer 10 operates in the same way as when connected to the second printer 20 through USB cable 2A (FIG. 1) even though the host computer 10 is connected to the first printer 130 through USB cable 2B.

The control unit 131 functions as a USB driver 53 by running a specific device driver program. The USB driver 53 uses the USB host controller 47 and operates as a host device as defined by the USB standard for the device connected to the USB interface 45, and can recognize and communicate with the connected device. In this embodiment the USB driver 53 is a device driver for the second printer 20, and functions to generate and output print commands and print data for the second printer 20. When the second printer 20 is connected to the USB interface 45, the USB driver 53 requests transmission of the USB device information from the second printer 20. The USB driver 53 then acquires the information sent by the second printer 20 in response to this request. The USB driver 53 then enters a state enabling communication with the second printer 20. In this event, the second printer 20 operates in the same way as when connected directly to the host computer 10 through USB cable 2A (FIG. 1).

When a print command and print data are output from the host computer 10 connected to USB interface 40, the device control unit 51 stores the commands and data in the receive buffer 54A created in the storage unit 54.
The device control unit 51 outputs the commands and data stored in the receive buffer 54A to the print control unit 55, and outputs to the second printer 20 by means of the USB driver 53. As a result, the commands and data sent by the host computer 10 are transmitted to the second printer 20.
The first printer 130 functions as a host device for the second printer 20 through the USB interface 45. The second printer 20 operates according to these commands and data in the same way as when commands and data are sent directly from the host are received. In other words, the second printer 20 receives the commands and data and prints in the same way as when the host computer 10 is connected to the USB interface 21 through USB cable 2A.

The first printer 130 has a main circuit board 36 (print control board) and an interface board 135. The first printer controller 32 that controls the first printer print unit 60 is mounted on the main circuit board 36.
The interface board 135 can be removably installed to the first printer 130 separately from the main circuit board 36. The control unit 131, memory 33, and USB interfaces 40, 45 are mounted on the interface board 135. The parts packaged on the interface board 135, and the first printer controller 32 disposed to the main circuit board 36, are connected so that they can exchange data with each other through an internal interface 37 in the first printer 130. Power may be supplied through the internal interface 37 to the parts on the interface board 135, or power may be supplied from the interface board 135 to the main circuit board 36 in a configuration having an external power source connected to the interface board 135.
Memory 34 connects to the first printer controller 32. Memory 34 is a storage unit that temporarily stores commands and data.

The print control unit 55 (data interpreting unit) determines if the first printer 130 matches the condition for printing based on the commands and data input from the device control unit 51. If the condition is met, the print control unit 55 generates a print command and print data, and outputs to the printer driver 56. The print control unit 55 detects, for example, if a predetermined specific string is contained in the print data sent from the host computer 10. If the specific string is detected, the print control unit 55 outputs the print command and print data stored in the storage unit 54 linked to that string to the first printer controller 32. More specifically, when the host computer 10 operates as a POS terminal and transmits print commands and print data for printing receipts, the print control unit 55 determines if a predetermined specific product name or product classification data is contained in the print data. If the product name or product classification data is contained in the print data, the print control unit 55 outputs a print command and print data for printing a previously stored coupon to the printer driver 56.
The printer driver 56 is a device driver that drives the first printer print unit 60 and main circuit board 36 of the first printer 130, and is embodied by the control unit 131 executing a specific device driver program.
As a result of this operation, when the host computer 10 sends commands and data for printing a receipt, the second printer 20 produces a receipt according to the received commands and data. The first printer 130 also prints a coupon related to the receipt.

The host computer 10 and second printer 20 can also operate in the same way as when they are connected directly to each other through USB cable 2A. The first printer 130 can also be disposed between the host computer 10 and second printer 20 without modifying the application program or device driver program that run on the host computer 10, and without changing an operating condition of the second printer 20. The first printer 130 can also print coupons related to the printed receipt, and the second printer 20 can continue to print receipts in the same way as before, without changing the configuration of the host computer 10 and second printer 20.

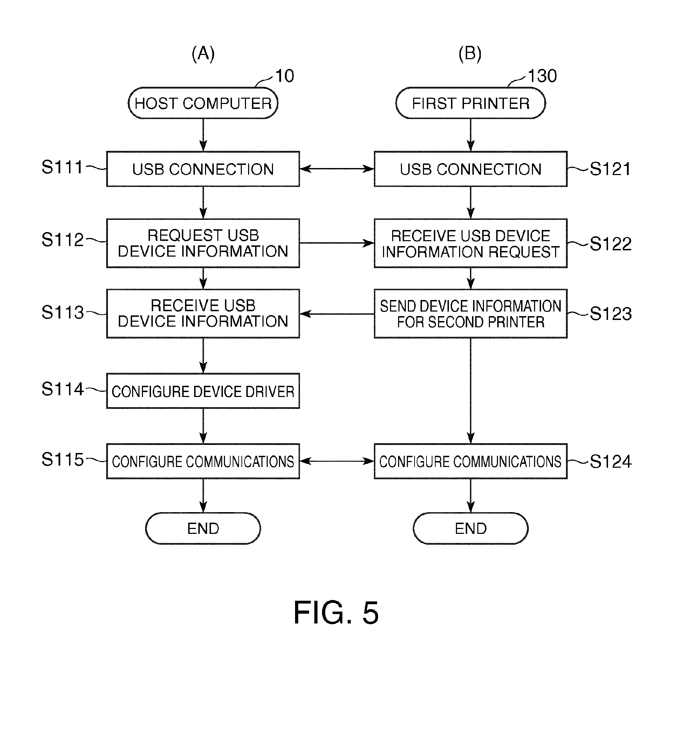

FIG. 5 is an exemplary sequence diagram showing the operation of parts of the printing system 1A, column (A) showing the operation of the host computer 10, and (B) showing the operation of the first printer 130. The operation shown in FIG. 5 is executed when the host computer 10 and first printer 130 are connected through USB cable 2B.
When the host computer 10 detects connection of a device to the USB-A connector 13 (step S111), the host computer 10 operates as a host device to the connected device, and requests the USB device information (step S112).
When the device control unit 51 of the first printer 130 detects connection of a device to the USB interface 40 (step S121), the device control unit 51 operates as a (target) device. The device control unit 51 receives a request for USB device information sent from the host computer 10 (step S122). The device control unit 51 then reads the USB device information for the second printer 20 stored in the device information storage unit 54B, and sends the information to the host computer 10 (step S123).
The host computer 10 receives the USB device information sent from the first printer 130 (step S113). The host computer 10 then uses the device driver execution unit 11B to execute the device driver program corresponding to the received USB device information (step S114).
The host computer 10 and first printer 130 then communicate with each other through USB cable 2B (steps S115, S124) and open a commands and data communication link therebetween. After the operation shown in FIG. 5, the host computer 10 recognizes the second printer 20 as the target device connected through USB cable 2B.

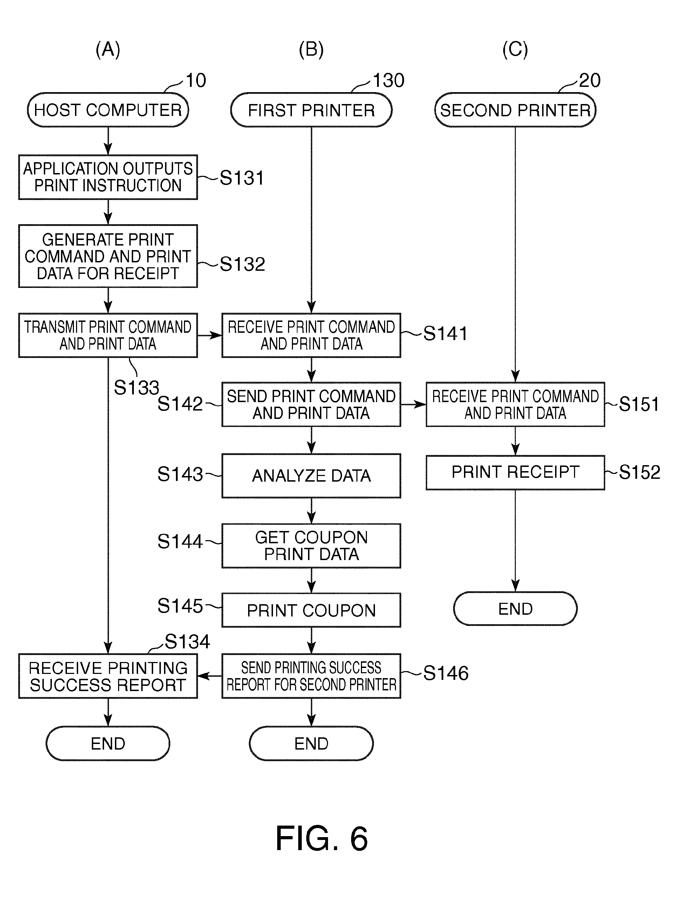

FIG. 6 is an exemplary sequence diagram showing the operation of parts of the printing system 1A, column (A) showing the operation of the host computer 10, (B) showing the operation of the first printer 130, and (C) showing the operation of the second printer 20. The operation shown in FIG. 6 is performed after the operation in FIG. 5.
When a document is created and a print instruction is output by the operation of the application execution unit 11A (step S131), the host computer 10 generates a print command and print data based on the print instruction (step S132). In this instance the device driver execution unit 11B generates the print command and print data to operate the second printer 20. The host computer 10 then outputs the generated print command and print data from the USB interface 12 (step S133).

The print command and print data sent by the host computer 10 is then received by the first printer 130 through the USB interface 40 (step S141). The device control unit 51 stores the print command and print data received by the USB interface 40 to the receive buffer 54A, and outputs the print command and print data from the USB interface 45 (step S142). The device control unit 51 also outputs the commands and data stored in the receive buffer 54A to the print control unit 55.
The print control unit 55 analyzes the print data stored in memory 33 (step S143). The print control unit 55 then acquires data for printing a coupon identified from the analyzed print data (step S144), and outputs the acquired data to the printer driver 56. The printer driver 56 outputs the data for printing a coupon through the internal interface 37 to the first printer controller 32, and a coupon is printed as controlled by the first printer controller 32 (step S145).
The print control unit 55 then generates and outputs a printing success report for the second printer 20 to the host computer 10 (step S146).
The host computer 10 receives the printing success report sent from the first printer 130 as the printing success report for the second printer 20 (step S134), and ends this process because printing ended.

The second printer 20 receives the print command and print data sent from the first printer 130 (step S151), and prints a receipt as controlled by the second printer controller 27 according to the received print command and print data (step S152).

The first printer 130 of the printing system 1A according to the second embodiment of the invention is connected to a host computer 10, and has a first printer print unit 60, device information storage unit 54B, USB interface 40, and device control unit 51. The device information storage unit 54B stores USB device information about the first printer 130, and USB device information about the second printer 20, which is a different printer. The host computer 10 connects to the USB interface 40. When a host computer 10 is connected to the USB interface 40, the device control unit 51 outputs the USB device information of the second printer 20 to the host computer 10. The first printer 130 outputs the USB device information for the second printer 20 to the host computer 10, enabling the host computer 10 to recognize that the second printer 20 was connected to the host computer 10. As a result, the printer connected to the host computer 10 can be changed from the second printer 20 to the first printer 130 without changing the configuration of the host computer 10.

When the host computer 10 outputs print commands and print data for the second printer 20, the device control unit 51 outputs those commands and data from the USB interface 45 to the second printer 20. As a result, the data output by the host computer 10 can be printed by the second printer 20.

The printing system 1A includes a host computer 10 that outputs data, and a first printer 130 having a first printer print unit 60 that prints and a connection unit that connects to the host computer 10. The printing system 1A also includes a second printer 20 having a USB interface 21 that connects and communicates with the first printer 130, and a second printer 20 with a second printer print unit 28 that prints.
The first printer 130 has a device information storage unit 54B that stores USB device information including the model (type) of the first printer 130, and USB device information including the model (type) of the second printer 20. When the host computer 10 requests the USB device information, the first printer 130 sends the USB device information for the second printer 20 stored in the device information storage unit 54B. Because the first printer 130 connected to the host computer 10 outputs the USB device information of the second printer 20 to the host computer 10, the host computer 10 can recognize the first printer 130 as the second printer 20. As a result, the first printer 130 can be connected to a host computer 10 that is compatible with the second printer 20 without changing the configuration of the host computer 10. Therefore, the printer configuration can be changed without changing the configuration of the host computer 10 in a system having a host computer 10 and printer connected together.

Preferred embodiments of the invention are described above, but the invention is not limited thereto and can obviously be modified and adapted as desired within the scope of the invention.
For example, the foregoing embodiments describe configurations having the USB interface 40 of the first printer 30, 130 connected to the host computer 10, and the second printer 20 connected to another USB interface 45. The invention is not so limited, however, and the device that connects to the USB interface 40 can be any device that can operate as a host device, such as another printer or a mobile terminal device having a USB host controller. The device connected to the USB interface 45 can also be any device that operates as a USB target device, such as a printer or other input/output device.
The second printer print unit 28 of the second printer 20, and the first printer print unit 60 of the first printer 30, 130 in the foregoing embodiments are described as printing to cut-sheet paper or roll paper. The print unit of the invention is not so limited, however, and a thermal printer, inkjet printer, dot impact printer, laser printer, or other type of printer may be used.
The function blocks shown in the function block diagrams can also be achieved through the cooperation of hardware and software, and do not suggest a specific hardware configuration. The configuration that executes the operations including the operations shown in the accompanying flow charts can also be embodied by these parts executing a program stored on an externally connectable non-transitory storage medium.
USB interface 40 and USB interface 45 are also not limited to being rendered as discrete hardware constructions. For example, USB-B connector 41 and USB-A connector 46 can be rendered in a single hardware construction having the functions of both USB device controller 42 and USB host controller 47.
The invention being thus described, it will be obvious that it may be varied in many ways. Such variations are not to be regarded as a departure from the spirit and scope of the invention, and all such modifications as would be obvious to one skilled in the art are intended to be included within the scope of the following claims. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A printing device comprising:
a first interface (40) for sending and receiving data;
a first device controller (42) for controlling the printing device (30; 130) to operate as a target device to a device (10) connected to the first interface (40);
a second interface (45) for sending and receiving data;
a second device controller (47) for controlling the printing device (30; 130) to operate as a host to a device (20) connected to the second interface (45); and
a print unit (32, 60) for printing based on data received by the first interface (40) as the target device, or data received by the second interface (45) as the host.

2. The printing device described in claim 1, wherein:
the first interface (40) is configured to send and receive data through the first device controller (42); and
the second interface (45) is configured to send and receive data through the second device controller (47).

3. The printing device described in claim 1 or 2, further comprising:
a storage unit (33; 54) for storing data received by the first interface (40); wherein
the print unit (32, 60) is configured to analyze the data stored in the storage unit (33; 54), and to print based on the result.

4. The printing device described in claim 3, wherein:
the storage unit (33; 54) is configured to store data received by the second interface.

5. The printing device described in any one of claims 1 to 4, wherein:
the first interface (40) is configured to be connected to a host computer (10) that sends a print instruction;
the second interface (45) is configured to be connected to a second printing device (20); and
the print unit (32, 60) is configured to print based on the received print instruction or based on a received command indicating a print result of the second printing device (20) when the second interface (45) receives the command indicating the print result of the second printing device (20).

6. The printing device described in any one of claims 1 to 5, wherein:
the first device controller (42) has a device control circuit compatible with a first protocol that controls operation as a target device; and
the second device controller (47) has a host control circuit compatible with a second protocol that controls operation of an external device connected to the second interface (45).

7. The printing device described in claim 5, further comprising:
an interface board (35) to which the first interface (40) and the second interface (45) are disposed; and
a print control board (36) to which a print control unit (32) for controlling the print unit (60) to print is disposed.

8. The printing device described in claim 5 or 6, further comprising:
a device information storage unit (54B) for storing first device information including the type of print unit, and second device information for a printing device different from the print unit; and
a control unit (131) for outputting the first device information or the second device information to the host computer (10) when the host computer (10) is connected to the first interface (40).

9. The printing device described in any one of claims 5 to 8, wherein:
when the host computer (10) outputs data that is processed by the second printing device (20), the printing device (30; 130) receives the output data through the first interface (40) and outputs the received data from the second interface (45).

10. A printing system comprising:
a host computer (10) for sending a print command and print data;
a first printing device (30; 130) according to any one of claims 1 to 9; and
a second printing device (20) including;
a communication unit (21, 26) for connecting to the second interface (45) of the first printing device (30; 130); and
a second print unit (28) for printing.

11. The printing system described in claim 10, wherein:
the first printing device (30; 130) is configured to receive the print command and print data sent from the host computer (10) through the first interface (40) with the first device controller (42),
to send the print command and print data received by the first interface (40) through the second interface (45) with the second device controller (47) to the second printing device (20), and
the first print unit (32, 60) of the first printing device (30; 130) is configured to print based on the print data received by the first interface (40); and
the second printing device (20) is configured to receive the print command and print data sent from the second interface (45) of the first printing device (30; 130) through the communication unit (21, 26), and to print the print data with the second print unit (28) based on the received print command.

12. The printing system described in claim 11, wherein:
the first printing device (30; 130) has a storage unit (33; 54) for storing print data received through the first interface (40), and
an analyzer (32) for analyzing the print data stored in the storage unit (33; 54); and
the first print unit (32, 60) of the first printing device (30; 130) is configured to print based on the result of analysis by the analyzer (32).

13. The printing system described in any one of claims 10 to 12, wherein:
the second printing device (20) is configured to send data related to the result of the second print unit (28) through the communication unit (21, 26) to the second interface (45) of the first printing device (30; 130); and
the first printing device (30; 130) is configured to receive the data related to the result of the second print unit (28) through the second interface (45), and
to send the data related to the result of the second print unit (28) received by the second interface (45) to the host computer (10) through the first interface (40).

14. The printing system described in claim 13, wherein:
the data related to the result of the second print unit (28) is a print error of the second print unit (28); and
the first interface (40) of the first printing device (30; 130) is configured to send the print error to the host computer (10).

15. The printing system described in any one of claims 10 to 14, wherein:
the first printing device (130) has a device information storage unit (54B) for storing first device information including the first print unit type, and second device information including the second print unit type, and
is configured to send the second device information stored in the device information storage unit (54B) to the host computer (10) when the host computer (10) requests device information from the first printing device (130).

16. The printing system described in any one of claims 10 to 15, wherein:
the first printing device (30; 130) has a data interpreter for analyzing print data sent from the host computer (10), and
a print data storage unit for storing predetermined information and print data related to the predetermined information;
the data interpreter is configured to determine if the predetermined information is contained in the print data; and
the first print unit (32, 60) of the first printing device (30; 130) is configured to print print data related to the predetermined information if the predetermined information is contained in the print data.

17. The printing system described in any one of claims 10 to 16, wherein:
the host computer (10) is a POS terminal for processing transaction information; and
the second printing device (20) is configured to print a receipt related to the transaction information sent from the POS terminal.

18. A printing method comprising:
- requesting, by a host computer (10), device information including a type of a printing device from a first printing device (30; 130) after the host computer (10) and the first printing device (30; 130) including a first print unit (32, 60) of the first printing device (30; 130) are connected;
- sending, by the first printing device (30; 130), second device information from a device information set including first device information identifying the type of the first print unit (32, 60) of the first printing device (30; 130) and the second device information about a second print unit (28) in a second printing device (20) when the device information is requested by the host computer (10);
- transmitting, by the host computer (10), print data to be processed by the second printing device (20);
- sending, by the first printing device (30; 130), the print data to the second printing device (20) connected to the first printing device (30; 130); and
- printing, by the second printing device (20), on the basis of the print data.
